# EUROPÄISCHE PATENTANMELDUNG

(11) **EP 0 962 369 A2**
(43) Veröffentlichungstag der Anmeldung: **08.12.1999**
(21) Anmeldenummer: 99109748.6
(22) Anmeldetag: 18.05.1999
(51) Int. Cl.: B60T 8/00, B60T 13/16, B62D 5/07

(54) **Vorrichtung zur Erzeugung eines Bremsdrucks mittels einer Pumpe**

(30) Priorität: 05.06.1998 DE 19825204
(71) Anmelder: DaimlerChrysler AG, 70567 Stuttgart (DE); MOOG GmbH, D-71034 Böblingen (DE)
(72) Erfinder: Freitag, Rainer, 73277 Owen (DE); Müller, Armin, 75391 Gechingen (DE); Tröster, Harry Dr., 71732 Tamm (DE); Duvenbeck, Michael, 23738 Riepsdorf (DE); Ringer, Franz, 71131 Jettingen (DE)

(57) **Zusammenfassung**

Eine Vorrichtung zur Erzeugung eines Bremsdrucks mittels einer Pumpe (10), die ein Volumen in die Kammer (51) eines Hauptbremszylinders (50) fördert und einen Druck aufbaut, der von wenigstens einem weiteren Aggregat (30), insbesondere einer hilfskraftunterstützten Lenkung, verwendet wird und mit wenigstens einem Verteil- und Drosselelement (20), durch welches die Kammer (51) des Hauptbremszylinders (50) und/oder das weitere Aggregat (30) mit einem vorgebbaren Druck beaufschlagbar sind, ist dadurch gekennzeichnet, daß das wenigstens eine Verteil- und Drosselelement (20) abhängig von der Bremspedalstellung und/oder von Fahrzustandsgrößen und/oder von Betriebsgrößen des Fahrzeugs derart ansteuerbar ist, daß die Kammer (51) und/oder das weitere Aggregat (30) mit einem von der Pumpe (10) erzeugten, einstellbaren Druck beaufschlagbar sind.

## Beschreibung

Die Erfindung betrifft eine Vorrichtung zur Erzeugung eines Bremsdrucks mittels einer Pumpe, die ein Volumen in die Kammer eines Hauptbremszylinders fördert und einen Druck aufbaut, der von wenigstens einem weiteren Aggregat, insbesondere einer hilfskraftunterstützten Lenkung, verwendet wird und mit wenigstens einem Verteil- und Drosselelement, durch welches die Kammer des Hauptbremszylinders und/oder das weitere Aggregat mit einem vorgebbaren Druck beaufschlagbar sind.

Eine derartige Vorrichtung geht beispielsweise aus der DE 196 40 456 A1 hervor.

Bei dieser Vorrichtung wird eine Mehrzahl von Verteil- und Drosselelementen verwendet, durch die der Druck in der Kammer des Hauptbremszylinders und/oder des weiteren Aggregats verteilbar und einstellbar ist. Die Ansteuerung dieser Verteil- und Drosselelemente erfordert einen verhältnismäßig großen Steueraufwand und ist darüber hinaus störanfällig.

Aufgabe der vorliegenden Erfindung ist es, eine gattungsgemäße Vorrichtung zur Erzeugung eines Bremsdrucks dahingehend weiterzubilden, daß bei minimalem Steueraufwand eine Einstellung und Verteilung des Bremsdrucks, der an der Kammer des Hauptbremszylinders und an dem weiteren Aggregat anliegt, auf einfache, störunanfällige und auf das Fahrzeug und die Fahrsituation angepaßte Weise realisierbar ist.

Diese Aufgabe wird bei einer Vorrichtung zur Erzeugung eines Bremsdrucks mittels einer Pumpe der eingangs beschriebenen Art erfindungsgemäß dadurch gelöst, daß das wenigstens eine Verteil- und Drosselelement abhängig von der Bremspedalstellung und/oder von Fahrzustandsgrößen und/oder von Betriebsgrößen des Fahrzeugs derart ansteuerbar ist, daß die Kammer und/oder das weitere Aggregat mit einem von der Pumpe erzeugten, einstellbaren Druck beaufschlagbar sind.

Durch das Verteil- und Drosselelement, welches abhängig von der Bremspedalstellung und/oder von Fahrzustands- und/oder von Betriebsgrößen des Fahrzeugs so ansteuerbar ist, daß die Kammer des Hauptbremszylinders und/oder das weitere Aggregat mit einem von der Pumpe erzeugten einstellbaren Druck beaufschlagbar sind, wird auf vorteilhafte Weise aufgrund der Versorgung sowohl der Bremsen als auch des weiteren Aggregats, beispielsweise einer hilfskraftunterstützten Lenkung, durch die gleiche Pumpe nicht nur die Betriebssicherheit sowohl der Lenkung als auch der Bremse erhöht, es ist darüber hinaus auch möglich, die Drücke zwischen Bremse und Lenkung so zu verteilen, und einzustellen, daß fahrdynamische Größen beeinflußbar sind. Darüber hinaus kann das Bremssystem und die Lenkung auf diese Weise auf vorgegebene fahrzeug- oder fahrerspezifische Konfigurationen angepaßt werden.

Eine besonders vorteilhafte Ausführungsform sieht vor, daß das Verteil- und Drosselelement wenigstens ein steuerbares Proportionalventil umfaßt, durch welches die Kammer und/oder das weitere Aggregat mit einem einstellbaren Druck beaufschlagbar sind.

Bei einer vorteilhaften Ausführungsform ist dabei vorgesehen, daß das Verteil- und Drosselelement ein 4/3-Wege-Proportionalventil ist, in dessen erster Schaltstellung das weitere Aggregat ungedrosselt mit der Pumpe und die Kammer des Hauptbremszylinders mit einem Flüssigkeitsvorratsbehälter verbunden sind, in dessen zweiter Schaltstellung die Kammer ungedrosselt und das weitere Aggregat steuerbar gedrosselt mit der Pumpe verbunden sind und in dessen dritter Schaltstellung das weitere Aggregat ungedrosselt mit der Pumpe und die Kammer des Hauptbremszylinders steuerbar gedrosselt mit dem Flüssigkeitsbehälter verbunden sind.

Durch dieses steuerbar betätigbare 4/3-Wege-Proportionalventil ist praktisch eine beliebige Druckverteilung zwischen der Fahrzeugbremse und dem weiteren Aggregat, beispielsweise einer hilfskraftunterstützten Lenkung möglich.

Bei einer anderen vorteilhaften Ausführungsform ist vorgesehen, daß das Verteil- und Drosselelement ein 5/3-Wege-Ventil umfaßt, in dessen erster Schaltstufe die Kammer und das weitere Aggregat über ein Stromregelventil gedrosselt mit einem Druck beaufschlagbar sind, in dessen zweiter Schaltstellung ausschließlich das weitere Aggregat ungedrosselt mit Druck beaufschlagbar ist und in dessen dritter Schaltstufe das weitere Aggregat und die Kammer ungedrosselt mit Druck beaufschlagbar sind, und daß in der zur Kammer führenden Leitung ein steuerbares 2/2-Wege-Stromregel-Proportionalventil angeordnet ist, dessen Ausgang mit einem Flüssigkeitsbehälter verbunden ist.

Vorzugsweise ist dabei vorgesehen, daß die Förderleistung der Pumpe in Abhängigkeit von dem Betätigungsweg des Hauptbremszylinders und/oder vom Umfang der Betätigung des weiteren Aggregats, vorzugsweise von der Drehgeschwindigkeit eines Lenkrads der hilfskraftunterstützten Lenkung gesteuert variierbar ist. Hierdurch kann bedarfsweise eine Druckerhöhung oder Druckabsenkung an dem Hauptbremszylinder und/oder dem weiteren Aggregat, das heißt der hilfskraftunterstützten Lenkung ohne Veränderung der Schaltstellung der Ventile vorgenommen werden. Drehgeschwindigkeit kann auch jede andere den Umfang der Betätigung und damit den Umfang des bereitzustellenden erforderlichen Drucks an dem weiteren Aggregat, beispielsweise der hilfskraftunterstützten Lenkung, charakterisierende Größe herangezogen werden, um die Förderleistung der Pumpe zu variieren.

Die weiteren Fahrzustands- und/oder Betriebsgrößen des Fahrzeugs, abhängig von denen das steuerbar betätigbare Verteil- und Drosselelement ansteuerbar ist, umfassen vorteilhafterweise folgende Größen: Radseitenkräfte, Radnormalkräfte, Längs- und Querneigung des Fahrzeugs, Längs- und Querbeschleunigung des Fahrzeugs, Luftwiderstand, Auf- und Abtriebskräfte des Fahrzeugs, Beladungszustand des Fahrzeugs, Antriebskräfte an den angetriebenen Rädern des Fahrzeugs, Fahrzeuglängsverzögerung.

Um ein variabel einstellbares Verstärkungsverhältnis zwischen Pedalkraft bzw. Pedalweg des Fahrers und der Fahrzeugverzögerung zu erreichen, ist bei einer vorteilhaften Ausführungsform vorgesehen, daß durch das steuerbar gedrosselte Einleiten von durch die Pumpe gefördertem Volumen in die Kammer des Hauptbremszylinders die Pedalkraft-/Weg-Verzögerungscharakteristik des Fahrzeugs einstellbar ist.

Eine weitere vorteilhafte Ausführungsform sieht vor, daß die Bremskraftverteilung abhängig von einer Vor- und Rückwärtsfahrt des Fahrzeugs durch ein in die Kammer des Hauptbremszylinders steuerbar einleitbares gedrosseltes Volumen einstellbar ist. Auf diese Weise kann auch bei einer Rückwärtsfahrt des Fahrzeugs ein stabiles Bremsverhalten auf besonders vorteilhafte Weise gewährleistet werden.

Die Ansteuerung erfolgt vorteilhafterweise über ein elektronisches Steuergerät, durch welches das Verteil- und Drosselelement in Abhängigkeit von der Bremspedalstellung und von den weiteren Betriebsgrößen des Fahrzeugs und Fahrzustandsgrößen ansteuerbar ist.

Dabei kann vorteilhafterweise vorgesehen sein, daß dem Steuergerät die Fahrzeuglängsistverzögerung zuführbar ist und mit weiteren Betriebsgrößen des Fahrzeugs und Fahrzustandsgrößen, insbesondere der vom Fahrer des Fahrzeugs vorgegebenen Fahrzeugsollverzögerung vergleichbar ist. Auf diese Weise kann das Bremsverhalten des Fahrzeugs unabhängig von Störgrößen, beispielsweise von äußeren auf das Fahrzeug einwirkenden Kräften, wie zum Beispiel Beladungszustand, Anhängerbetrieb, Steigung bzw. Gefälle, Gegenwind und von inneren Kräften, wie zum Beispiel Reibwertstreuung der Bremsbeläge oder Ungenauigkeiten des Drehmotormoments gemacht werden.

Weitere Vorteile und Merkmale der Erfindung sind Gegenstand der nachfolgenden Beschreibung sowie der zeichnerischen Darstellung einiger Ausführungsbeispiele.

In der Zeichnung zeigen:
- Fig. 1: ein Ausführungsbeispiel einer erfindungsgemäßen Vorrichtung zur Erzeugung eines Bremsdrucks mittels einer Pumpe und
- Fig. 2: ein weiteres Ausführungsbeispiel einer erfindungsgemäßen Vorrichtung zur Erzeugung eines Bremsdrucks mittels einer Pumpe.

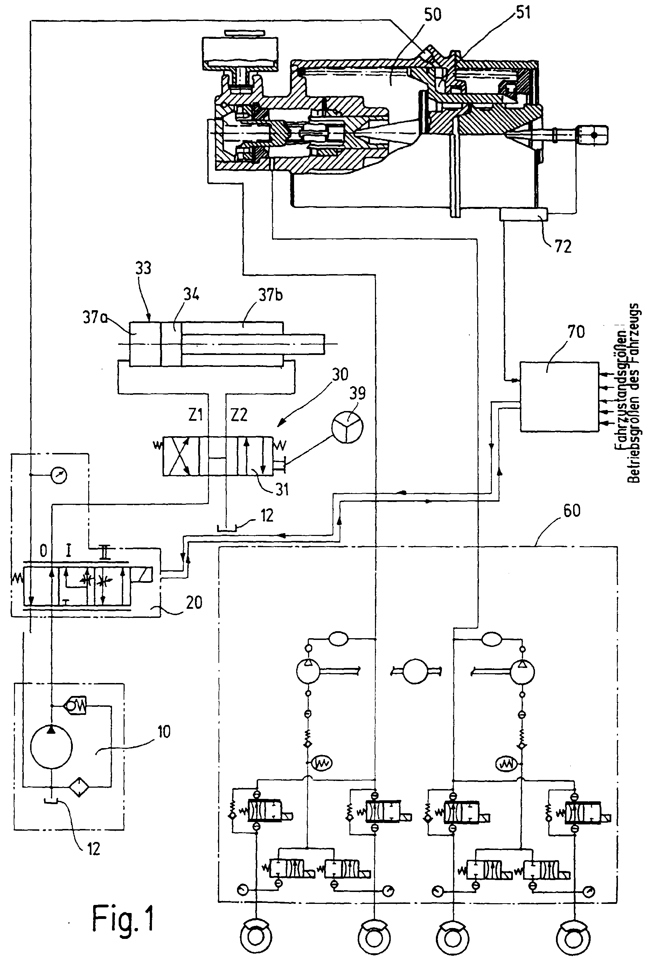

Ein Ausführungsbeispiel einer Vorrichtung zur Erzeugung eines Bremsdrucks, dargestellt in Fig. 1, umfaßt eine Pumpe 10, die Flüssigkeit aus einem Flüssigkeitsvorratsbehälter 12 fördert. Die Druckseite der Pumpe 10 ist mit einem Anschluß eines ansteuerbaren 4/3-Wege-Proportionalventiles 20 verbunden. Ein weiterer Anschluß des 4/3-Wege-Proportionalventils ist mit dem Flüssigkeitsvorratsbehälter 12 verbunden. Ein weiterer Anschluß des 4/3-Wege-Proportionalventils ist mit einem Anschluß eines 4/3-Wege-Ventils 31 eines weiteren Aggregats 30 verbunden. Das weitere Aggregat 30 ist hier eine im einzelnen nicht näher dargestellte hilfskraftunterstützte Lenkung.

Ein weiterer Anschluß des 4/3-Wege-Ventils 31 des weiteren Aggregats 30 ist mit dem Flüssigkeitsvorratsbehälter 12 verbunden. Zwei weitere Anschlüsse Z1 und Z2 des 4/3-Wege-Ventils 31 der hilfskraftunterstützten Lenkung 30 sind mit jeweils einer Kammer 37a, 37b eines Zylinders 33 verbunden, wobei diese Kammern 37a, 37b durch einen Kolben 34 getrennt sind. Je nachdem, in welche der beiden Kammern 37a, 37b dabei Flüssigkeit gefördert wird, wird eine Lenkbewegung in linker bzw. rechter Richtung unterstützt.

Ein anderer Anschluß des 4/3-Wege-Proportionalventils 20 ist mit der Kammer 51 eines Hauptbremszylinders 50 verbunden.

In der in Fig. 1 gezeigten Stellung 0 des 4/3-Wege-Proportionalventils ist die Druckseite der Pumpe über das in seiner neutralen Stellung stehende 4/3-Wege-Ventil 31 der hilfskraftunterstützten Lenkung 30 mit dem Flüssigkeitsvorratsbehälter 12 verbunden und damit die Saugseite der Pumpe 10 kurzgeschlossen. Durch eine entsprechende Ansteuerung des 4/3-Wege-Ventils 31 der hilfskraftunterstützten Lenkung 30 wird dann eine der Kammern 37a oder 37b des Zylinders mit der Druckseite der Pumpe 10 und die jeweils andere Kammer 37a ode 37b über eine Rücklaufleitung 32 mit dem Flüssigkeitsvorratsbehälter 12 verbunden. In Abhängigkeit von der Ansteuerung des 4/3-Wege-Ventils 31 der hilfskraftunterstützten Lenkung 30 wird also eine durch ein Lenkrad 39 eingeleitete Lenkbewegung in linker bzw. rechter Richtung unterstützt.

Wenn ein Bremsdruck benötigt wird, wird das 4/3-Wege-Proportionalventil 20 durch Ansteuerung mittels eines Steuergeräts 70 in seine weitere Schaltstellung I umgeschaltet. In dieser Schaltstellung I ist die hilfskraftunterstützte Lenkung 30 über ein einstellbares Stromregelelement mit der Druckseite der Pumpe 10 verbunden, wohingegen die Kammer 51 des Hauptbremszylinders 50 ungedrosselt mit der Druckseite der Pumpe 10 verbunden ist. Durch Variation des Stromregelelements mittels des Steuergeräts 70 wird der Druck gewissermaßen zwischen dem Hauptbremszylinder 50 und der hilfskraftunterstützten Lenkung 30 "verteilt" und eingestellt. Die Variation des Stromregelelements in der Schaltstellung I des 4/3-Wege-Proportionalventils wird dabei von dem Steuergerät 70 in Abhängigkeit von dem Pedalweg, der durch ein Sensorelement 72 erfaßt und dem Steuergerät 70 zugeführt wird und in Abhängigkeit von weiteren Betriebsgrößen des Fahrzeugs und Fahrzustandsgrößen, die durch weitere (nicht dargestellte) Sensorelemente erfaßt werden, vorgenommen. Der Ausgang des Hauptbremszylinders 50 ist dabei mit einer an sich bekannten ABS-Hydraulikeinheit 60 verbunden, welche im Sinne einer proportionalen Radbremsdruckregelung modifizierte Ventile aufweist, um den Bremsdruck an den einzelnen Rädern einstellbar zu machen.

In einer weiteren Schaltstellung II des 4/3-Wege-Proportionalventlis 20 ist die Kammer 51 des Hauptbremszylinders 50 über ein von dem Steuergerät 70 ansteuerbar variierbares Stromregelelement mit dem Flüssigkeitsvorratsbehälter 12 verbunden, wohingegen die hilfkraftunterstützte Lenkung 30 mit dem Druckausgang der Pumpe 10 verbunden ist. In diesem Zustand ist eine Lenkungsfunktion und gleichzeitig eine Bremsfunktion möglich.

Die Einstellung des Stromregelelements wird auch hierbei durch das Steuergerät 70 in Abhängigkeit von der Bremspedalstellung, die von dem Fahrer vorgegeben wird und von weiteren Betriebsgrößen des Fahrzeugs und Fahrzustandsgrößen durch das Steuergerät 70 vorgenommen.

Die Einstellung der Stromregelelemente des 4/3-Wege-Proportionalventils 20 in Schaltstellung I und II wird dabei so vorgenommen, daß eine gleichzeitige Brems- und Lenkfunktion gegeben ist. Insbesondere muß während der Bremsfunktion an der hilfskraftunterstützten Lenkung 30 eine ausreichende Ölmenge zur Verfügung stehen. Die Schaltstellung I wird dabei eingenommen, wenn das Fahrzeug voll gebremst werden soll. In diesem Fahrzustand wird durch direkte Verbindung der Druckseite mit der Kammer 51 des Hauptbremszylinders eine Ölmenge zum Druckaufbau bereitgestellt. Während dieser Zeit wird der hilfskraftunterstützten Lenkung 30 gedrosselt gleichzeitig eine weitere geringfügig kleinere Ölmenge bereitgestellt. Nach erreichtem Druckaufbau nimmt das 4/3-Wege-Proportionalventil 20 beispielsweise die in I dargestellte Schaltstellung ein, in der ein gewünschter Bremsdruck gehalten werden kann, oder die Schaltstellung II, in der der Bremsdruck durch Verbindung der Kammer 51 des Hauptbremszylinders 50 mit dem Flüssigkeitsvorratsbehälter 12 über das variierbare Stromregelelement aufrechterhalten wird und gleichzeitig der hilfskraftunterstützten Lenkung 30 durch direkte Verbindung mit dem Druckausgang der Pumpe 10 eine ausreichende Ölmenge für die Funktion "Lenken" bereitgestellt wird.

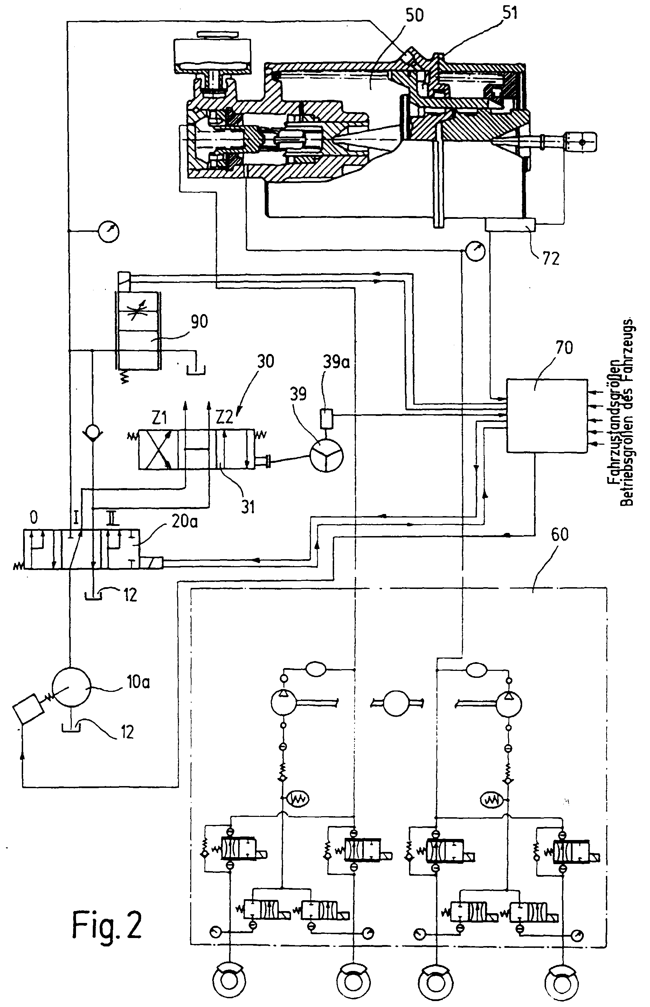

Bei einem zweiten Ausführungsbeispiel, dargestellt in Fig. 2 und 4, sind diejenigen Elemente, die mit denen des ersten identisch sind, mit denselben Bezugszeichen versehen, so daß bezüglich deren Beschreibung auf die Ausführungen zum ersten Ausführungsbeispiel voll inhaltlich Bezug genommen wird.

Im Gegensatz zum ersten Ausführungsbeispiel umfaßt das Verteil- und Drosselelement bei diesem Ausführungsbeispiel ein 5/3-Wege-Ventil, in dessen Schaltstufe O die Kammer 51 und die hilfskraftunterstützte Lenkung 30 über ein Stromregelelement mit Druck beaufschlagbar sind. In der zweiten, mit I bezeichneten Stellung des 5/3-Wege-Ventils ist dagegen ausschließlich die hilfskraftunterstützte Lenkung 30 mit einer Pumpe 10a verbunden. In einer dritten, mit II bezeichneten Stellung des 5/3-Wege-Ventils 20a sind die hilfskraftunterstütze Lenkung 30 und die Kammer 51 des Hauptbremszylinders 50 ungedrosselt mit Druck beaufschlagt. In der zur Kammer 51 des Hauptbremszylinders 50 führenden Leitung ist ferner ein steuerbares 2/2-Wege-Stromregel-Proportionalventil 90 angeordnet. Neben dem Sensorelement 72, welches die Stellung des Kolbens des Hauptbremszylinders 50 erfaßt, ist ein Sensor 39a vorgesehen, der die Drehgeschwindigkeit des Lenkrads 39 erfaßt. Die Signale beider Sensoren werden der Steuereinheit 70 zugeführt, welche ein Signal zur Ansteuerung der Förderpumpe 10a ausgibt. Durch dieses Ausgangssignal ist die Fördermenge der Pumpe 10a variierbar.

Die Funktionsweise der Vorrichtung ist folgende. In Stellung O des 5/3-Wege-Ventils 20a wird ein Bremsdruck aufgebaut. Dabei findet durch das Stromregelelement des Ventils 20a eine Grobregelung und durch das 2/2-Wege-Stromregel-Proportionalventil 90 eine Feinregelung statt, durch die der Bremsdruck fein dosierbar ist. Wenn der Bremsdruck höher ist als der Druck in der hilfskraftunterstützten Lenkung 30, schaltet das Ventil 20a in die Stellung I.

Die Stellung II dient dagegen dazu, den Druck in der Bremse und in der hilfskraftunterstützten Lenkung 30 zu halten.

Durch das von dem Steuergerät 70 ansteuerbare 4/3-Wege-Proportionalventil 20 oder das 5/3-Wege-Ventil 20a und das 2/2 Wege-Stromregel-Proportionalventil 90 sind in Abhängigkeit von dem Pedalwegsensor und von weiteren Eingangsgrößen in Verbindung mit dem Hydraulikaggregat 60, dessen Ventile vorteilhafterweise ebenfalls von dem Steuergerät 70 ansteuerbar sind, nachfolgend beschriebene Funktion realisierbar.

Es ist ein variabel einstellbares Verstärkungsverhältnis zwischen der Pedalkraft bzw. dem Pedalweg und der aus den Hydraulikdrücken in den Radbremsen resultierenden Bremskräften und somit der Fahrzeugverzögerung möglich. Dies ist vorteilhafterweise nutzbar in Verbindung mit Fahrertypklassifikationen, fahrerspezifischen Fahrzeugkonfigurationen sowie zur Anpassung des Bremssystems an verschiedene Bremsanlagen und Fahrzeuge.

Es sind darüber hinaus in Abhängigkeit von einer Vor- und Rückwärtsfahrt einstellbare Pedalkraft/Weg-Verzögerungscharakteristiken für eine optimale Dossierbarkeit der Bremsen realisierbar.

Insbesondere ist die Bremskraftverteilung für eine Vor- und Rückwärtsfahrt umschaltbar. Dadurch kann auch bei der Rückwärtsfahrt des Fahrzeugs ein stabiles Bremsverhalten gewährleistet werden.

Es ist eine dynamisch optimale Bremskraftverteilung durch Bestimmung der für ein stabiles Fahrverhalten erforderlichen Radseitenkräfte, die als Eingangsgrößen durch weitere Sensormittel detektiert werden und Einstellung der Bremskräfte im Sinne einer maximalen Ausnutzung des Kraftschlußbeiwertes zwischen Reifen und Fahrbahn möglich. Hierzu werden die radindividuellen Normalkräfte in den Radaufstandsebenen unter Berücksichtigung von Rad- und Achslastverlagerungen durch Fahrbahnlängs- und -querneigung, Längs- und Querbeschleunigung des Fahrzeugs, Luftwiderstand sowie Auf- und Abttiebskräfte des Fahrzeugs einschließlich Schräganströmung des Fahrzeugs und des Beladungszustands des Fahrzeugs berechnet, wobei diese Größe durch (nicht dargestellte) Sensormittel erfaßt oder aus anderen Größen berechnet werden.

Die Radnormalkräfte können dabei beispielsweise aus der Messung der Feder- und gegebenenfalls Dämpferkräfte, wie es bei teil- und vollaktiven Federungssystemen bekannt ist, bestimmt werden. Der Beladungszustand kann beispielsweise über eine an sich bekannte Niveauregulierung, die beispielsweise an den gesamten Achsen wirkt, erfaßt werden. Die Bestimmung der einzustellenden Bremskräfte an den angetriebenen Rädern erfolgt dabei über die Antriebskräfte, wobei das Steuergerät 70 in diesem Falle mit der Motor- und Getriebeelektronik des Fahrzeugs vernetzbar ist.

Möglich ist auch eine radindividuelle Anpassung der Bremskräfte an aus dem Stand der Technik bekannte Fahrdynamikregelungen, bei der zur Optimierung von Fahrwerksystemen die Radaufstandskräfte durch variable Wankmomente Abstützung bei Kurvenfahrt und/oder aktives Verspannen über die Fahrzeugdiagonale beeinflußt werden können. Eine solche Fahrdynamikregelung geht beispielsweise aus der DE 43 35 769 C1 hervor, auf die vorliegend Bezug genommen wird.

Darüber hinaus ist auch eine Bestimmung des Bremsbelagreibwerts an der Vorder- und Hinterachse möglich. Bei nicht betätigter Bremse ergibt sich nämlich eine Fahrzeugverzögerung in der Ebene aus den bekannten Größen Fahrzeugmasse, Luftwiderstandskraft, Rollwiderstandskraft und Antriebskraft an den Rädern. Liegt die aus den Radgeschwindigkeiten ermittelte oder direkt gemessene Fahrzeugverzögerung in einem geeignet gewählten Toleranzband, so kann auf eine Fahrt in der Ebene geschlossen werden. Wenn der Fahrer nun eine bestimmte Sollbremsverzögerung wünscht, die er durch Verstellen des Bremspedals vorgibt, so kann durch ausschließliche Betätigung der Vorder- oder Hinterachsbremsen aus dem Zusammenhang zwischen gemessenen Radbremsdrücken und sich einstellender Fahrzeuglängsverzögerung der mittlere Bremsbelagreibwert der Vorder- oder Hinterachse bestimmt werden. Bei einem vorgegebenen bekannten mittleren Bremsbelagreibwert einer Achse kann hierdurch bei Bremsungen mit allen vier Radbremsen auch der mittlere Bremsbelagreibwert bestimmt werden.

Ein wesentlicher Punkt ist auch die vom Fahrer gewünschten Sollverzögerung, die er durch eine Bremspedalstellung vorgibt. Durch Vergleich der vom Fahrer vorgegebenen Sollverzögerung mit der aus den Radgeschwindigkeiten bestimmten oder in geeigneter Weise gemessenen Fahrzeugistverzögerung und Rückführung der Abweichung in einen entsprechend ausgelegten Regler, der Bestandteil des Steuergeräts 70 ist, kann das Bremsverhalten des Fahrzeugs unabhängig von Störgrößen in Form von äußeren auf das Fahrzeug einwirkenden Kräften, wie zum Beispiel Beladungszustand, Anhängerbetrieb, Steigung bzw. Gefälle, Gegenwind und von inneren Kräften, wie zum Beispiel Reibwertstreuungen der Bremsbeläge oder Ungenauigkeiten des Motormoments gemacht werden.

Die Vorrichtung ist auch bei Fahrzeugen mit Elektro- oder Elektrohybridantrieben einsetzbar.

Sämtliche der oben genannten Funktionen lassen sich durch Änderung der Schaltstellung des 4/3-Wege-Proportionalventils und der durch das Steuergerät 70 ansteuerbaren Stromregelelemente dieses 4/3-Wege-Proportionalventils oder durch Änderung der Schaltstellungen des 5/3-Wege-Ventils 20a in Verbindung mit dem 2/2-Wege-Stromregel-Proportionalventil 90 realisieren.

## Patentansprüche

1. Vorrichtung zur Erzeugung eines Bremsdrucks mittels einer Pumpe (10), die ein Volumen in die Kammer eines Hauptbremszylinders (50) fördert und einen Druck aufbaut, der von wenigstens einem weiteren Aggregat (30), insbesondere einer hilfskraftunterstützten Lenkung, verwendet wird und mit wenigstens einem Verteil- und Drosselelement (20), durch welches die Kammer des Hauptbremszylinders (50) und/oder das weitere Aggregat (30) mit einem vorgebbaren Druck beaufschlagbar sind, dadurch gekennzeichnet, daß das wenigstens eine Verteil- und Drosselelement (20) abhängig von der Bremspedalstellung und/oder von Fahrzustandsgrößen und/oder von Betriebsgrößen des Fahrzeugs derart ansteuerbar ist, daß die Kammer und/oder das weitere Aggregat (30) mit einem von der Pumpe (10) erzeugten, einstellbaren Druck beaufschlagbar sind.

2. Vorrichtung nach Anspruch 1, dadurch gekennzeichnet, daß das Verteil- und Drosselelement wenigstens ein steuerbares Proportionalventil (20; 90) umfaßt, durch welches die Kammer (51) und/oder das weitere Aggregat (30) mit einem einstellbaren Druck beaufschlagbar sind.

3. Vorrichtung nach Anspruch 1 oder 2, dadurch gekennzeichnet, daß das Verteil- und Drosselelement (20) ein steuerbar betätigbares 4/3-Wege-Proportionalventil ist, in dessen erster Schaltstellung das weitere Aggregat (30) ungedrosselt mit der Pumpe (10) und die Kammer des Hauptbremszylinders (50) mit einem Flüssigkeitsvorratsbehälter (12) verbunden sind, in dessen zweiter Schaltstellung die Kammer ungedrosselt und das weitere Aggregat (30) steuerbar gedrosselt mit der Pumpe (10) verbunden sind und in dessen dritter Schaltstellung das weitere Aggregat (30) ungedrosselt mit der Pumpe und die Kammer des Hauptbremszylinders (50) steuerbar gedrosselt mit dem Flüssigkeitsvorratsbehälter (12) verbunden sind.

4. Vorrichtung nach Anspruch 1 oder 2, dadurch gekennzeichnet, daß das Verteil- und Drosselelement ein 5/3-Wege-Ventil umfaßt, in dessen erster Schaltstufe (Stellung 0) die Kammer (51) und das weitere Aggregat (30) über ein Stromregelelement gedrosselt mit Druck beaufschlagbar sind, in dessen zweiter Schaltstufe (Stellung I) das weitere Aggregat (30) ungedrosselt mit Druck beaufschlagbar ist und in dessen dritter Schaltstufe (Stellung II) das weitere Aggregat und die Kammer (51) ungedrosselt mit Druck beaufschlagbar sind, und daß in der zur Kammer (51) führenden Leitung ein steuerbares 2/2-Wege-Stromregel-Proportionalventil angeordnet ist, dessen Ausgang mit einem Flüssigkeitsbehälter (12) verbunden ist.

5. Vorrichtung nach Anspruch 4, dadurch gekennzeichnet, daß die Förderleistung der Pumpe (10a) in Abhängigkeit von dem Betätigungsweg des Hauptbremszylinders (50) und vom Umfang der Betätigung des weiteren Aggregats, vorzugsweise von der Drehgeschwindigkeit eines Lenkrads (39) der hilfskraftunterstützten Lenkung gesteuert variierbar ist.

6. Vorrichtung nach einem der Ansprüche 1 bis 5, dadurch gekennzeichnet, daß die weiteren Fahrzustands- und/oder Betriebsgrößen des Fahrzeugs eine oder mehrere der folgenden Größen umfassen: Radseitenkräfte, Radnormalkräfte, Längs- und Querneigung des Fahrzeugs, Längs- und Querbeschleunigung, Fahrzeugluftwiderstand, Auf- und Abriebskräfte des Fahrzeugs, Beladungszustand des Fahrzeugs, Antriebskräfte an den angetriebenen Rädern des Fahrzeugs, Fahrzeuglängsverzögerung.

7. Vorrichtung nach einem der Ansprüche 1 bis 6, dadurch gekennzeichnet, daß die Pedalkraft/Weg-Verzögerungs-charakteristik des Fahrzeugs durch das steuerbar gedrosselte Einleiten von durch die Pumpe (10) gefördertem Volumen in die Kammer des Hauptbremszylinders (50) einstellbar ist.

8. Vorrichtung nach einem der Ansprüche 1 bis 7, dadurch gekennzeichnet, daß durch ein abhängig von einer Vor- und Rückwärtsfahrt des Fahrzeugs in die Kammer des Hauptbremszylinders (50) steuerbar einleitbares gedrosseltes Volumen die Bremskraftverteilung einstellbar ist.

9. Vorrichtung nach einem der Ansprüche 1 bis 8, dadurch gekennzeichnet, daß ein elektronisches Steuergerät (70) vorgesehen ist, durch welches das Verteil- und Drosselelement (20) in Abhängigkeit von der Bremspedalstellung und von den weiteren Betriebsgrößen des Fahrzeugs und Fahrzustandsgrößen ansteuerbar ist.

10. Vorrichtung nach Anspruch 9, dadurch gekennzeichnet, daß dem Steuergerät die Fahrzeuglängsistverzögerung zuführbar ist und mit weiteren Betriebsgrößen des Fahrzeugs und Fahrzustandsgrößen, insbesondere der vom Fahrer des Fahrzeugs vorgegebenen Fahrzeugsollverzögerung, vergleichbar ist.
